# DEMANDE DE BREVET EUROPEEN

(11) **EP 3 689 203 A1**
(43) Date de publication de la demande: **05.08.2020**
(21) Numéro de dépôt: 19213591.1
(22) Date de dépôt: 04.12.2019
(51) Int. Cl.: A47J 42/02, A47J 42/04, A47J 42/08, A47J 42/32, A47J 42/34, A47J 42/38

(54) **MOULIN A PRODUITS CONDIMENTAIRES**

(30) Priorité: 29.01.2019 FR 1900762
(71) Demandeur: Peugeot Saveurs SNC, 25440 Quingey (FR)
(72) Inventeur: BROUILLAC, Nicolas, 25410 Saint Vit (FR); SAVATIER, Samuel, 25440 Buffard (FR); CARRIER, Gaétan, 74370 Villaz (FR)
(74) Mandataire: Hugues, Catherine

(57) **Abrégé**

La présente invention concerne un moulin (1) à produits condimentaires, tel que notamment de la cannelle en bâtons, hébergeant un réservoir (3) de stockage du produit condimentaire communiquant, au travers d'un passage (5), avec un mécanisme de mouture (4), ledit réservoir (3) étant équipé de moyens de fragmentation du produit condimentaire. Il est caractérisé en ce que les moyens de fragmentation sont définis par des moyens de concassage du produit condimentaire

## Description

La présente invention a pour objet un moulin à produits condimentaires, tel que notamment de la cannelle en bâtons, hébergeant un réservoir de stockage du produit condimentaire communiquant, au travers d'un passage, avec un mécanisme de mouture, ledit réservoir étant équipé de moyens de fragmentation du produit condimentaire.

Plus précisément, l'invention concerne plus particulièrement les moulins manuels ou électriques destiné à transformer des condiments de nature grossière, sèche, dure, et parfois de dimensions importantes, tels que notamment du poivre de Jamaïque, du poivre long, du clou de girofle, de la cannelle, des graines de courge, des noix, des piments, du sucre en morceaux, du thé, etc., de leur état brut vers une texture à la fois adaptée à l'utilisation envisagée, et à une exhalaison optimale de leurs arômes.

Actuellement, de nombreux accessoires pour la transformation de produits condimentaires en particules fines, voire pulvérulentes, reposant sur différents principes de fonctionnement, sont disponibles sur le marché.

Une première catégorie d'entre eux comporte de manière classique un mécanisme de broyage et un réservoir, le cas échéant transparent et remplissable, dans lequel est stocké un condiment, selon le cas entier, ou préalablement réduit en fragments de taille compatible avec la structure du mécanisme de broyage. A ce propos, cette étape, opérée avant le remplissage du réservoir, peut être effectuée manuellement, à l'aide d'un couteau ou d'une râpe par exemple, ou au moyen d'un shaker à épices spécifiquement dédié à cet usage, et comportant des moyens de fragmentation adaptés.

Il est également possible de recourir à des dispositifs constitués d'un réservoir et de moyens de râpage, préconisés pour réduire en poudre des produits tels que la noix de muscade ou des bâtons de cannelle.

Par ailleurs, un dispositif plus complet, reposant sur une combinaison de moyens de hachage et de moyens de broyage, décrit dans la publication EP 1 605 805, est également disponible sur le marché. Toutefois, bien qu'il soit étudié pour réduire en poudre des produits de texture relativement molle ou friable à l'état brut, tels que notamment de l'ail, du piment, des écorces d'oranges, etc., il a été constaté que ce dispositif s'avère inefficace en ce qui concerne des produits de texture sèche et dure.

Il convient également de souligner qu'afin de préserver au maximum les arômes volatiles des épices, leur transformation en poudre plus ou moins fine doit impérativement s'effectuer à partir de leur état brut et au moment de leur dégustation ou de la préparation du plat auquel ils sont incorporés. Ainsi, les amateurs d'épices sont généralement réticents à l'idée de les acheter pré-broyés ou déjà finement moulus, dans la mesure où ils sont conscients de la perte de qualité subie. Les accessoires reposant sur la mise en œuvre de produits condimentaires pré-transformés ne sauront par conséquent pas satisfaire un tel public.

D'autre part, le mécanisme de mouture dont sont équipés les moulins standards conviennent pour moudre des produits ou fragments de produits d'une taille donnée. Moudre des produits de taille très différente, comme par exemple des bâtons de cannelle ou du piment séché, s'avère par conséquent impossible au moyen d'un même moulin de ce type. En d'autres termes, cette solution implique de disposer de plusieurs moulins, dédiés chacun à une catégorie donnée d'épice.

La technologie consistant à râper le condiment ne donne pas davantage entière satisfaction, dans la mesure où la mouture obtenue demeure trop grossière par rapport aux critères de qualité classiquement admis, selon lesquels cette dernière est reconnue lorsque 80 % des particules la composant présentent un diamètre inférieur à 500 pm. De plus, ce type de technologie ne permet pas de régler la finesse de la mouture, ce qui est indispensable dans le cas des poivres par exemple. Il en va de même pour les accessoires de type « shaker » permettant uniquement de fragmenter grossièrement et de mélanger les produits condimentaires, mais nullement de les réduire finement en poudre.

Ainsi, le présent demandeur a observé qu'aucun des accessoires offerts à la vente à ce jour ne représente une solution satisfaisante pour réduire en poudre fine et homogène une multiplicité de produits condimentaires différents de nature sèche, dure, de taille parfois importante, lorsqu'ils sont utilisés bruts, et par conséquent non altérés par un traitement préalable.

La présente invention a par conséquent pour but de proposer un nouveau type de moulin spécifiquement étudié pour fournir, à partir de produits condimentaires secs et durs, utilisés bruts pour profiter pleinement de leurs qualités gustatives et nutritionnelles, une mouture fine et homogène, dans laquelle au moins 80% des particules obtenues ont un diamètre inférieur à 500 µm. Un autre objectif de l'invention est de prévoir pour un tel moulin une structure robuste permettant d'en garantir la longévité et de préserver la sécurité de l'utilisateur. La solution envisagée a également pour objectif d'affranchir l'utilisateur de la nécessité de disposer d'un moulin donné pour un produit donné, au travers d'une configuration adaptée à une mise en œuvre avec une pluralité de produits condimentaires différents.

A cet effet, la présente invention a pour objet un moulin du genre indiqué en préambule, caractérisé en ce que les moyens de fragmentation sont définis par des moyens de concassage du produit condimentaire.

Il est en particulier prévu que les moyens de concassage comportent au moins un corps solide disposé librement dans le réservoir.

Conformément à une variante de réalisation préférentielle de l'invention, le réservoir est défini par un cylindre creux, de diamètre interne d, fermé par une voûte et présentant un fond comportant au moins un orifice d'entrée vers ledit passage, tandis que le corps solide est défini par une bille de diamètre D inférieur à d.

Par ailleurs, dans ce cas, le diamètre d du réservoir est de préférence supérieur ou égal à 1,5 fois le diamètre D de la bille.

Une caractéristique additionnelle du moulin selon l'invention est définie par le fait que la bille présente de préférence une masse m comprise entre 55g et 75g tandis que le réservoir présente une hauteur L comprise entre 3cm et 15cm et cela en fonction du type de condiment à concasser.

Afin d'améliorer encore l'efficacité du fractionnement, la face interne du réservoir peut en outre comporter une pluralité de nervures, pouvant être réparties radialement sur la voûte et/ou le fond dudit réservoir.

Selon une autre caractéristique, le fond du réservoir comporte préférentiellement plusieurs orifices délimités par lesdites nervures.

Le moulin selon l'invention se caractérise par ailleurs en ce qu'il est de préférence équipé de moyens amortisseurs disposés entre le réservoir et le mécanisme de mouture, et permettant d'améliorer sa robustesse.

D'autre part, dans certains cas, le réservoir peut présenter une structure dans laquelle il est formé de deux pièces séparables.

Dans ce cas, le moulin selon l'invention peut avantageusement comporter des moyens amortisseurs disposés entre les deux pièces séparables.

Conformément à une variante de réalisation envisageable, les moyens amortisseurs comportent au moins un anneau en matériau élastomère.

Conformément à l'invention, il est en outre prévu d'associer des moyens de réglage de la finesse de la mouture au mécanisme de mouture du présent moulin.

Afin d'éviter tout blocage du mécanisme de mouture par un fragment de condiment, ledit mécanisme de broyage est préférentiellement pourvu de moyens de brassage du produit condimentaire fragmenté.

L'invention sera mieux comprise, et d'autres caractéristiques et avantages de l'invention apparaîtront à la lumière de la description qui suit d'une variante de réalisation du moulin selon l'invention donnée uniquement à titre indicatif et non limitatif.

La description est à lire en relation avec les dessins annexés dans lesquels :
- La figure 1 est une vue de face d'une variante de réalisation d'un moulin selon l'invention, dans lequel le réservoir est constitué de deux pièces séparables, dites « pièce supérieure » et « pièce inférieure »,
- La figure 2 est une vue en coupe longitudinale du moulin de la figure 1,
- La figure 3 est une vue agrandie du détail D1 de la figure 2,
- La figure 4 est une vue agrandie du détail D2 de la figure 2,

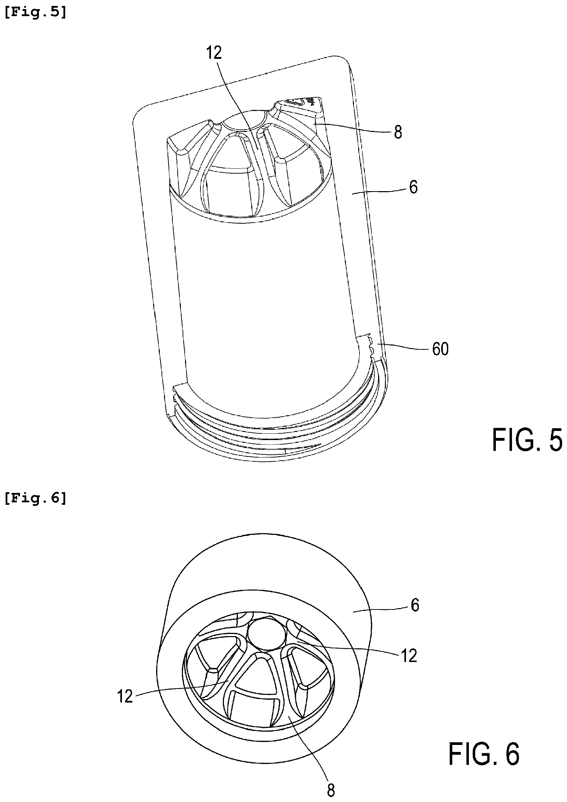

- La figure 5 est une vue en coupe longitudinale de la pièce supérieure du réservoir que comporte le moulin de la figure 1,
- La figure 6 est une vue de dessous de la pièce supérieure du réservoir que comporte le moulin de la figure 1,
- La figure 7 est une vue en coupe longitudinale de la pièce inférieure du réservoir que comporte le moulin de la figure 1, et
- La figure 8 illustre une partie du moulin de la figure 1, vu de dessous.

Conformément aux figures, dans la variante de réalisation illustrée, le moulin 1 à produits condimentaires selon l'invention comporte un corps 2 hébergeant un réservoir 3 de stockage d'un produit condimentaire communiquant, au travers d'un passage 5, avec un mécanisme de mouture 4. Ce dernier comporte de manière classique une poire dentée 40, mobile en rotation dans une cuvette dentée 41 au travers d'une tige 42 destinée à être actionnée par un utilisateur manipulant le moulin 1.

Il est précisé que les différentes pièces constitutives du moulin 1 sont fabriquées à partir de matériaux classiquement employés à cet effet, adaptés au domaine alimentaire, tels que par exemple un matériau plastique, du bois, une céramique, du métal, ou tout autre matériau présentant des propriétés équivalentes.

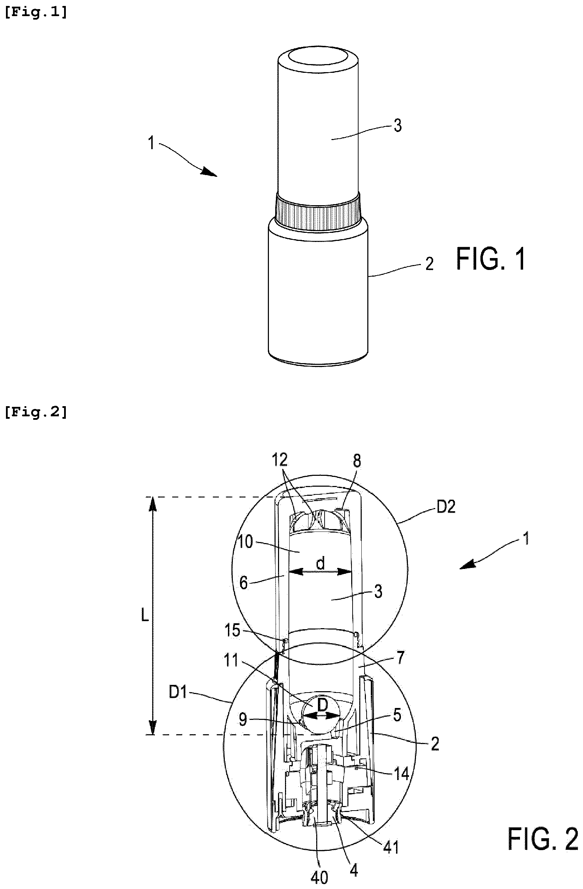

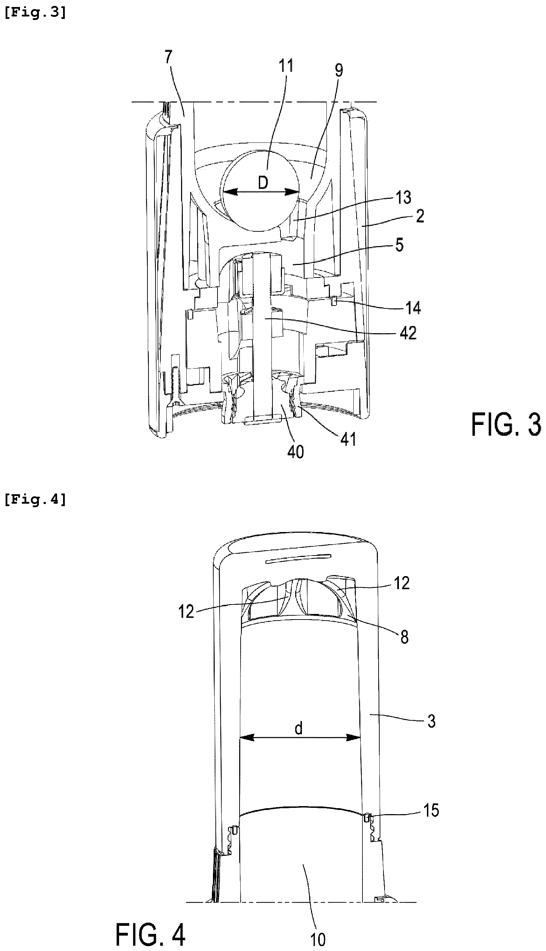

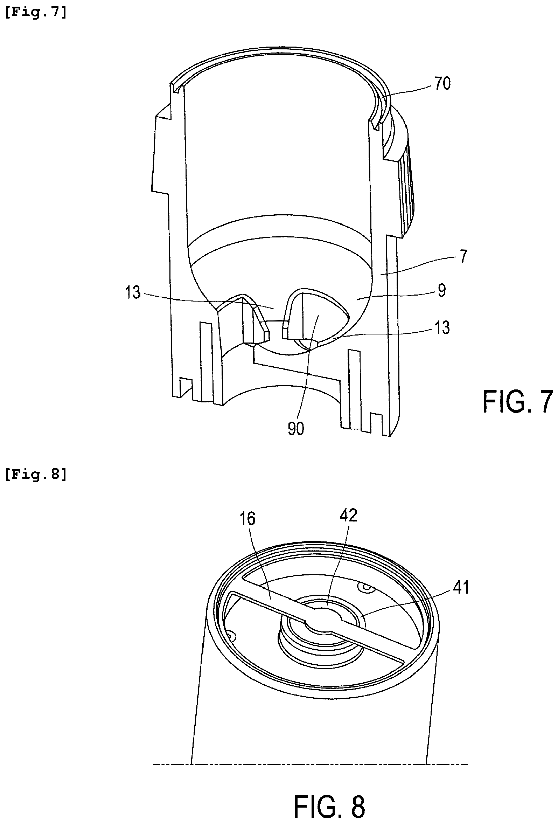

En référence aux figures 2 et 4, dans la variante de réalisation illustrée, le réservoir 3 est défini par un cylindre creux, présentant une longueur L de l'ordre de 15cm et un diamètre interne d de l'ordre de 4cm. Le réservoir 3 est fermé par une voûte 8 et comporte un fond 9 pourvu d'une pluralité d'orifices d'entrée 90 (cf. fig. 7) vers le passage 5, spécifiquement conformés pour ne laisser passer que les fragments dont la taille est adaptée au mécanisme de mouture 4 dont le moulin 1 est pourvu, les autres demeurant retenus dans le réservoir 3 jusqu'à présenter la dimension requise.

Plus précisément, le réservoir 3 est formé d'une première pièce, dite « pièce supérieure » 6 et d'une seconde pièce dite « pièce inférieure » 7 séparables, comportant respectivement la voûte 8 et le fond 9. L'extrémité inférieure 60 de la pièce supérieure 6 et l'extrémité supérieure 70 de la pièce inférieure 7 présentent une structure complémentaire, de manière à permettre leur emboîtement. Par ailleurs, la présence d'un filetage sur chacune des extrémités 60, 70 permet d'assurer, dans leur état emboîté, le blocage en position des pièces supérieure 6 et inférieure 7 l'une par rapport à l'autre. Prévoir une telle structure en deux parties du réservoir 3 permet, après séparation de la pièce supérieure 6 de la pièce inférieure 7, d'offrir un accès au volume interne 10 du réservoir 3, en particulier afin d'y disposer le produit condimentaire à moudre.

Il est à noter que dans la variante de réalisation illustrée, la pièce inférieure 7 et le corps 2 du moulin 1 sont montés en rotation l'un par rapport à l'autre, la poire 40 du mécanisme de mouture 4 étant solidaire de la pièce inférieure 7, tandis que la cuvette 41 est solidaire du corps 2.

Conformément à l'invention, une bille 11, par exemple en métal, dont la masse m est de l'ordre de 65g, et le diamètre D de l'ordre de 2cm est disposée librement dans le volume interne 10 du réservoir 3, dans lequel elle est par conséquent apte à se déplacer dans toutes les directions sous l'action d'un secouement du moulin 1 par un utilisateur. De fait, la bille 11, projetée sur un produit condimentaire contenu dans le réservoir 3, permet de mélanger ce dernier et de le réduire en petits fragments de taille et de forme homogène, aptes à traverser les orifices 90 et à s'introduire progressivement dans le passage 5 pour alimenter le mécanisme de mouture 4 en particules transformables par ce dernier en poudre de qualité.

Conformément à l'invention, les dimensions du réservoir 3 et de la bille 11, ainsi que la masse de celle-ci, sont spécifiquement calculées pour permettre un fractionnement efficace de tous produits condimentaires de nature sèche et dure à l'état brut, quelle que soit leur forme, leur taille ou leur densité. Ainsi, le moulin 1 selon l'invention présente une certaine polyvalence et est adapté pour réduire en poudre de grande qualité gustative, de granulométrie adéquate et de texture agréable, l'ensemble des épices ou condiments présentant une nature sèche et dure, c'est à dire aussi bien de la cannelle que de l'anis étoilé, que du poivre long ou du clou de girofle, etc.

Par ailleurs, il convient de noter que dans la variante de réalisation considérée, le réservoir 3 présente un diamètre d égal à deux fois le diamètre D de la bille 11. Une telle caractéristique permet avantageusement d'éviter que le produit condimentaire ne demeure coincé dans le réservoir 3, entre la face interne de celui et la bille 11 et de garantir qu'il alimente en continu le mécanisme de mouture, une fois réduit en petits fragments aptes à pénétrer dans le passage 5.

En outre, tel qu'illustré aux figures, la face interne du réservoir 3 comporte une pluralité de nervures 12, 13 respectivement réparties, de manière radiale, sur sa voûte 8 et son fond 9 sur lequel elles délimitent les différents orifices 90 d'entrée vers le passage 5. En somme, ces nervures définissent une pluralité de protubérances pointant vers le volume interne 10 du réservoir 3 et sur lesquelles la bille 11 et le produit condimentaire subissent des chocs supplémentaires, améliorant ainsi la fragmentation et le mélange dudit produit.

Afin de garantir la solidité et la robustesse du moulin 1, des moyens amortisseurs sont prévus, définis par deux anneaux 14, 15 en matériau élastomère disposés, pour l'un, entre le réservoir 3 et le mécanisme de mouture 4 et, pour l'autre, entre les pièces supérieure 6 et inférieure 7 du réservoir 3. Ces anneaux 14, 15 permettent d'absorber les chocs dus aux déplacements successifs de la bille 11 dans le réservoir 3 et de préserver l'intégrité des éléments constitutifs du moulin 1 et par conséquent la sécurité de l'utilisateur.

Dans la variante de réalisation illustrée, le mécanisme de mouture 4 comporte par ailleurs avantageusement des moyens de brassage des fragments de produit condimentaire introduits dans le passage 5 permettant d'éviter que des morceaux ne stagnent dans celui-ci.

Des moyens de réglage 16 de la finesse de la mouture, permettant d'ajuster la distance s'étendant entre la paroi externe de la poire 40 et la paroi interne de la cuvette 41 sont également prévus dans la variante de réalisation illustrée aux figures (cf. fig. 8).

En pratique, lors de l'utilisation du moulin 1 selon l'invention, l'utilisateur introduit d'abord le produit condimentaire à moudre dans le réservoir 3 en accédant à son volume interne 10 à la suite d'une désolidarisation des pièces supérieure 6 et inférieure 7. Une fois ces dernières réassemblées, il suffit dans un premier temps à l'utilisateur de secouer le moulin 1 à vitesse sensiblement constante pour que le produit condimentaire soit fragmenté en plus petits morceaux aptes à traverser les orifices 90 du fond du réservoir et à pénétrer dans l'espace s'étendant entre la poire 40 et la cuvette 41. Un mouvement de rotation appliqué par exemple au corps 2 du moulin 1 par rapport à la pièce inférieure 7 du réservoir 3, permet ensuite de provoquer la rotation de la cuvette 41 par rapport à la poire 40, et par conséquent de moudre en poudre fine le produit condimentaire préalablement fragmenté.

## Revendications

1. Moulin (1) à produits condimentaires, tel que notamment de la cannelle en bâtons, hébergeant un réservoir (3) de stockage du produit condimentaire communiquant, au travers d'un passage (5), avec un mécanisme de mouture (4), ledit réservoir (3) étant équipé de moyens de fragmentation du produit condimentaire, **caractérisé en ce que** les moyens de fragmentation sont définis par des moyens de concassage du produit condimentaire.

2. Moulin (1) selon la revendication 1, **caractérisé en ce que** les moyens de concassage comportent au moins un corps solide disposé librement dans le réservoir (3).

3. Moulin (1) selon la revendication 2, **caractérisé en ce que** le réservoir (3) est défini par un cylindre creux, de diamètre interne d, fermé par une voûte (8) et présentant un fond (9) comportant au moins un orifice (90) d'entrée vers ledit passage (5), tandis que le corps solide est défini par une bille (11) de diamètre D inférieur à d.

4. Moulin (1) selon la revendication 3, **caractérisé en ce que** le diamètre d du réservoir (3) est supérieur ou égal à deux fois le diamètre D de la bille (11).

5. Moulin (1) selon la revendication 4, **caractérisé en ce que** la bille (11) présente une masse m comprise entre 55g et 75g tandis que le réservoir (3) présente une hauteur L comprise entre 3 cm et 15 cm.

6. Moulin (1) selon l'une quelconque des revendications précédentes, **caractérisé en ce que** la face interne du réservoir (3) comporte une pluralité de nervures (12, 13).

7. Moulin (1) selon la revendication 6 dans son rattachement à la revendication 3, **caractérisé en ce que** les nervures (12, 13) sont réparties radialement sur la voûte (8) et/ou le fond (9) dudit réservoir (3).

8. Moulin (1) selon la revendication 7, **caractérisé en ce que** le fond (9) comporte plusieurs orifices (90) d'entrée vers ledit passage (5) délimités par lesdites nervures (13).

9. Moulin (1) selon l'une quelconque des revendications précédentes, **caractérisé en ce qu'**il comporte des moyens amortisseurs disposés entre le réservoir (3) et le mécanisme de mouture (4).

10. Moulin (1) selon l'une quelconque des revendications précédentes, **caractérisé en ce que** ledit réservoir (3) est formé de deux pièces séparables (6, 7).

11. Moulin (1) selon la revendication 10, **caractérisé en ce qu'**il comporte des moyens amortisseurs (15) disposés entre les deux pièces séparables (6, 7).

12. Moulin (1) selon l'une quelconque des revendications 9 à 10, **caractérisé en ce que** les moyens amortisseurs comportent au moins un anneau en matériau élastomère.

13. Moulin (1) selon l'une quelconque des revendications précédentes, **caractérisé en ce que** le mécanisme de mouture (4) comporte des moyens (16) de réglage de la finesse de la mouture.

14. Moulin (1) selon l'une quelconque des revendications précédentes, **caractérisé en ce que** le mécanisme de mouture (4) comporte des moyens de brassage du produit condimentaire fragmenté.
